**Europäisches Patentamt**

**European Patent Office**

**Office européen des brevets**

(19)

(11) Veröffentlichungsnummer: **0 005 254**
A2

(12)

# EUROPÄISCHE PATENTANMELDUNG

(21) Anmeldenummer: 79101310.5

(22) Anmeldetag: 02.05.79

(51) Int. Cl.²: **A 63 B 19/02,** B 62 K 1/00

---

(30) Priorität: 02.05.78 DE 7813331 U

(43) Veröffentlichungstag der Anmeldung: 14.11.79
Patentblatt 79/23

(84) Benannte Vertragsstaaten: **AT BE CH DE FR GB IT LU NL SE**

(71) Anmelder: **Dotor, Thomas, Werringser Strasse 10, D-5750 Menden (DE)**

(72) Erfinder: **Dotor, Thomas, Werringser Strasse 10, D-5750 Menden (DE)**

(74) Vertreter: **Schröter, Martin, Dipl.-Ing., Im Tückwinkel 22, D-5860 Iserlohn (DE)**

---

(54) **Sport- und Spielgerät.**

(57) Bei einem Sport- und Spielgerät zur rollenden Fortbewegung sind zwei konzentrische, in axialer Richtung gegeneinander nichtverschiebliche Ringe, Reifen od. dgl. (1, 2) vorgesehen, die durch Rollkörper (3) auf Abstand gehalten sind. Der Innendurchmesser des Innenringes (2) ist der Sitz- oder Stehgröße einer Person angepaßt. Im Inneren dieses Innenringes (2) sind eine Haltevorrichtung (6) und eine dieser etwa gegenüberliegende Sitz- oder Auftrittsvorrichtung (5) vorgesehen.

– 1 –

## Sport-und Spielgerät

Die Erfindung betrifft ein Sport-und Spielgerät zur rollenden Fortbewegung.

Bekannt ist als Sportgerät ein sogenanntes Rhönrad, welches aus zwei Stahlrohrreifen von etwa 2 m Ø besteht, die in schulterbreitem Abstand durch Querstangen verbunden sind. In einem solchen Gerät steht die sporttreibende Person mit den Füßen in zwei Befestigungsvorrichtungen und hält sich mit den beiden gestreckten Armen an entsprechenden Haltegriffen. Durch entsprechenden Körperschwung ist es möglich, mit diesem Gerät sich rollend fortzubewegen und bestimmte Sportübungen auszuführen.

Die Aufgabe der Erfindung besteht darin, ein Sport-und Spielgerät zur rollenden Fortbewegung zu schaffen, bei dem die Benutzerperson sich während der Fortbewegung in einer gleichbleibenden sitzenden bzw. stehenden Position befindet und sich durch Abstoßbewegungen oder auf einer schiefen Ebene fortbewegen kann.

Zur Lösung dieser Aufgabe ist ein solches Sport-und Spielgerät gekennzeichnet durch zwei konzentrische, durch Rollenkörper auf Abstand gehaltene, in axialer Richtung gegeneinander nichtverschiebliche Ringe, Reifen o.dgl., wobei der Innendurchmesser des Innenringes oder - reifens der Sitz-oder Stehgröße einer Person angepaßt ist und eine Haltevorrichtung und dieser etwa gegenüberliegend eine Sitz-oder Auftrittsvorrichtung aufweist.

Nach einer bevorzugten Ausführungsart der Erfindung ist das Gerät gekennzeichnet durch mehrere über den Umfang gleichmäßig verteilte, am Innenring gehaltene Rollen. Diese Rollen können in am Innenring befestigten Haltern drehbar gelagert sein. Zweckmäßigerweise

- 3 -          0005254

sind im Inneren des Innenringes eine oder mehrere Haltegriffe vorgesehen und eine Steh- oder Sitzplatte in einer etwa dem Griff gegenüberliegenden Position.

Ein solches Sport-und Spielgerät ist insbesondere für Kinder gedacht. Es ermöglicht Übungen zur Gleichgewichtsschulung und dient neben der Möglichkeit der Körperertüchtigung auch der Befriedigung des Spieltriebes. Das aus verschiedenen Materialien herstellbare Gerät ist in seiner Konstruktion äußerst einfach und daher preisgünstig herstellbar. Es kann sowohl aus im Querschnitt vollkreis - oder rohrförmigen oder flachen Ringen als auch aus Reifen mit breiterer Aufstandsfläche hergestellt werden.

Anhand eines abgebildeten Ausführungsbeispieles wird die Erfindung im folgenden näher erläutert: Es zeigt

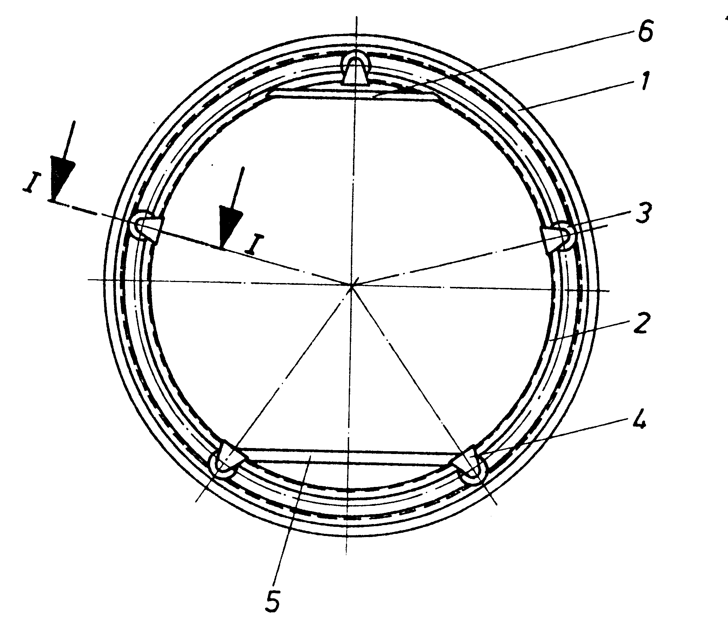

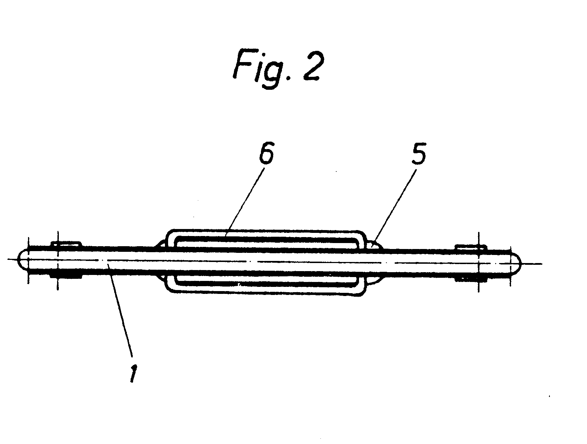

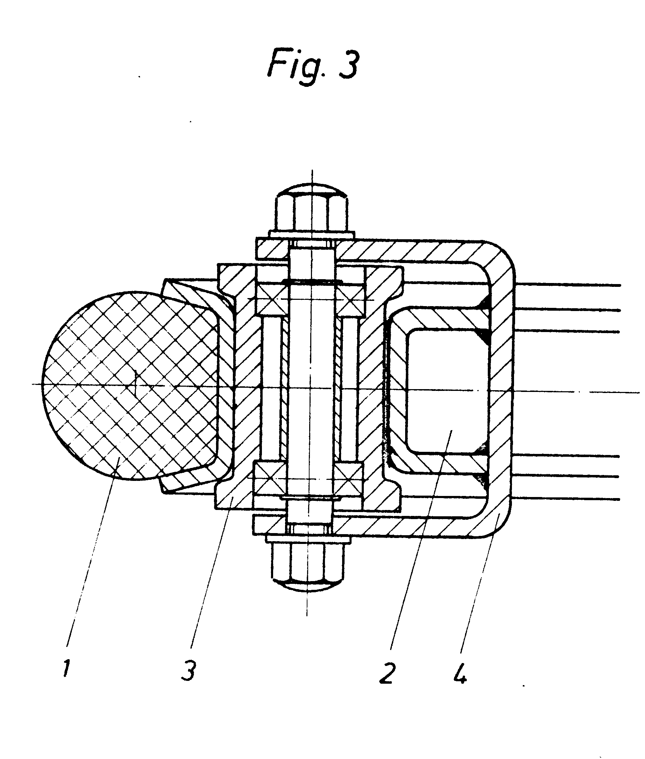

Figur 1 die Seitenansicht eines Gerätes, Figur 2 eine Draufsicht und Figur 3 einen Schnitt nach der Linie I - I in Figur 1.

Das dargestellte Sport-und Spielgerät besteht aus den zwei konzentrisch angeordneten, durch Rollen-

- 4 -

körper auf Abstand gehaltenen Ringen 1 und 2, die einen kreisförmigen Querschnitt aufweisen. Dabei kann es sich um glatte oder ummantelte Stahlrohre oder auch um entsprechend verstärkte Kunststoffkonstruktionen handeln. Durch entsprechendes **Einanderübergreifen** oder durch Eingreifen der Rollkörper in beide Ringe wird je nach Art der Konstruktion sichergestellt, daß sich die beiden Ringe 1 und 2 in axialer Richtung nicht oder nur unwesentlich gegeneinander verschieben können. Statt der beiden gezeigten Ringe 1 und 2 sind auch breitere Reifen möglich, die konzentrisch ineinander abrollen.

Am Innenring 2 sind mit entsprechenden Haltern 4 Rollkörper 3 gelagert, beispielsweise Konusoder Kegelrollen. Diese Rollenkonstruktionen werden der Breite der Ringe angepaßt. Sie können außerdem der Führung der beiden Ringe gegeneinander dienen. Beispielsweise könnte der Außenring 1 im Querschnitt U-förmig ausgebildet sein und auf entsprechenden durch

- 5 -

die Schenkel U geführten Wellen jeweils die Rollkörper aufnehmen, wobei in den entsprechend ausgebildeten Rollen der Innenring 2 geführt sein könnte. Der äußere Ring könnte dabei an seiner Außenfläche eine Kunststoffbeschichtung tragen.

In der Regel hat ein solches Sport-oder Spielgerät eine derartige Größe, daß im Inneren des Innenringes 2 ein Kind eine sitzende oder stehende Position einnehmen kann. Dazu ist eine Sitz-oder Auftrittsplatte 5 im Innenring 2 befestigt. Etwa gegenüberliegend ist außerdem eine Haltevorrichtung 6 befestigt, an der sich die entsprechende Person mindestens mit einer Hand festhalten kann. Ein solches Gerät könnte über den Innenumfang verteilt mehrere Haltegriffe und/oder Platten aufweisen, die gleichzeitig der Versteifung des Innenringes dienen können.

In der sitzenden oder stehenden Position kann das Gerät auf einer Ebene durch Abstoßen mit einem Fuß bewegt werden. Dabei verbleibt der

- 6 -

Innenring 2 in einer nichtdrehenden Position,
während sich der Außenring 1 über die Rollen 3
um den Innenring dreht und auf der Ebene abrollt. Auf einer schiefen Ebene rollt ein
solches Gerät ohne Anstoßbewegung ab. Die
Anbringung einer entsprechenden Bremsvorrichtung zwischen Innen-und Außenring ist
möglich.

Patentansprüche:

1. Sport-und Spielgerät zur rollenden Fortbewegung, gekennzeichnet durch zwei konzentrische, durch Rollkörper (3) auf Abstand gehaltene,in axialer Richtung gegeneinander nichtverschiebliche Ringe, Reifen o.dgl. (1,2), wobei der Innendurchmesser des Innenringes (2) oder - reifens der Sitz- oder Stehgröße einer Person angepaßt ist und eine Haltevorrichtung (6) und dieser etwa gegenüberliegend eine Sitz-oder Auftrittsvorrichtung (5) aufweist.

2. Gerät nach Anspruch 1, gekennzeichnet durch mehrere über den Umfang gleichmäßig verteilte, am Innenring (2) gehaltene Rollen (3).

3. Gerät nach Anspruch 2, dadurch gekennzeichnet, daß die Rollen (3) in am Innenring (2) befestigten Haltern (4) drehbar gelagert sind.

4. Gerät nach Anspruch 1, gekennzeichnet durch einen oder mehrere Haltegriffe (6) im Inneren des Innenringes (2) und durch eine Steh-oder Sitzplatte (5) in einer etwa dem Griff gegenüberliegenden Position.

Fig.1

Fig. 2

0005254

Fig. 3

1    3    2    4